# EUROPÄISCHE PATENTANMELDUNG

(11) **EP 0 857 417 A2**
(43) Veröffentlichungstag der Anmeldung: **12.08.1998**
(21) Anmeldenummer: 98100664.6
(22) Anmeldetag: 16.01.1998
(51) Int. Cl.: A01G 9/00

(54) **Pflanzgefäss**

(30) Priorität: 11.02.1997 DE 19705130
(71) Anmelder: Stöver, Hermann, 27239 Twistringen (DE)
(72) Erfinder: Stöver, Hermann, 27239 Twistringen (DE)
(74) Vertreter: Bischof, Hans-Jochen, Dipl.-Ing.

(57) **Zusammenfassung**

Die Erfindung bezieht sich auf ein Pflanzgefäß, das aus einer Naturfaserschicht als Träger eines Substrates gebildet ist, zur Aufnahme von Pflanzen aller Art. Eine Bahn aus einem Naturfasergeflecht ist mit einem Substrat belegt und wird mit den Längsseiten über das Substrat geschlagen zu einer schlauchförmigen Matte. In Abständen, die den gewünschten Mattenlängen entsprechen, wird quer zur Längsrichtung der Matte eine Naturfaserschicht abschließend eingebracht, die die Schnittfläche an den Trennstellen der Matte bildet. Die Matte wird durch Steppnähte zusammengefügt. Die so gebildete Matte wird zu einer Schnecke aufgerollt, verspannt und mit einem Netz umgeben. Zur Versteifung des Gefäßes wird ein Drahtgeflecht eingebracht, über das die Matte geschlagen ist. Die Matte kann auch in Lagen übereinander aufgebaut werden. Auf einer Naturfaserbahn liegt das Substrat auf, auf das ein Drahtgeflecht gelegt ist. Abschließend wird dann wieder eine Naturfaserbahn aufgebracht und alle Lagen werden miteinander versteppt.

## Beschreibung

Die Erfindung bezieht sich auf ein ballenförmiges Pflanzgefäß zur Aufnahme von Pflanzen aller Art, bestehend aus Naturfasern zwischen denen ein Substrat eingebracht ist.

Planzen werden immer mehr in Töpfen gezogen, die aus Naturfasern gebildet sind. Diese Töpfe lassen sich leicht in das Erdreich einbringen, so daß die Pflanzen nicht ausgetopft werden müssen. Gegenüber Kunststofftöpfen und Tontöpfen entfällt auch das Problem der Entsorgung. Die Pflazenfasertöpfe bestehen aus verrottbaren Fasern, die sich je nach Einsatz in vier bis sechs Jahren zersetzen.

Die bekannten Pflanzenfasertöpfe lassen sich jedoch nur in rel. kleinen Größen herstellen. Von einer bestimmten Größe an wird der Topf labil, so daß durch das eingefüllte Substrat seine Haltbarkeit und seine Transportfähigkeit nicht mehr gewährleistet ist. Pflanzentöpfe aus Naturfasern sind ab einer bestimmten Größe nicht mehr geeignet frei zu stehen. Der Druck der innen liegenden Erde ist dann so stark, daß der äussere Topf sich verzieht oder gar zerstört. Man geht dann dazu über die Pflanzen wieder in Kübel zu setzen, die aus festem harten Material bestehen. Diese Kübel gestatten je nach Größe ein Bepflanzen meist erst vor Ort.

Die Aufgabe der Erfindung besteht darin, Pflanzen beliebiger Art in Pflanzgefäßen aus Naturfasern aufzunehmen, die in allen erforderlichen Größen herstellbar sind und die alle Voraussetzungen für das Wachstum der Pflanzen erfüllen. Die ferner ein in sich festes Gebilde sind, das unabhängig von der Größe transportfähig ist und somit ein Aufstellen der Pflanzgefäße an jedem Ort ermöglicht.

Die Lösung der Erfindung ist den kennzeichnenden Merkmalen der Ansprüche zu entnehmen.
Der Vorteil der Erfindung liegt darin, daß das Gewicht der Pflanzgefäße wesentlich verringert ist, womit Größen erzielbar sind, die bisher nur von Betonkübeln bekannt sind.

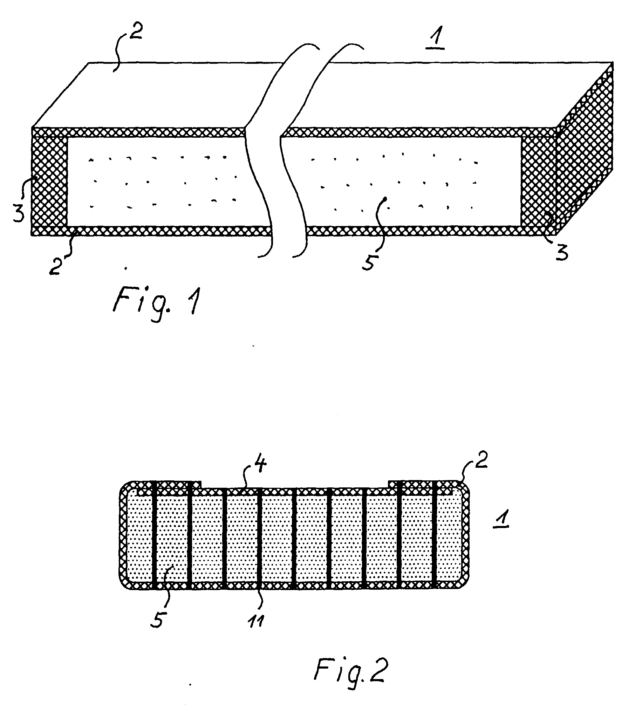

Die Erfindung wird in den Zeichnungsbeispielen anhand der Fig. 1-9 näher beschrieben.

Das Pflanzgefäß wird aus vorgefertigten Matten 1 gebildet. Der Aufbau der Matte 1 besteht aus einem Naturfasergeflecht 2, das in Bahnen vorgegebener Breiten gefertigt ist. Die Breiten der Bahnen und ihre Dicke sind dem Verwendungszweck angepaßt. Diese Bahnen aus Naturfasergeflecht 2 werden mit einem Substrat 5 belegt und zu einer das Substrat umschliessenden Matte 1 geformt, indem die Bahnseiten des Naturfasergeflechtes 2 über das Substrat 5 umgeschlagen werden, wie Fig. 2 zeigt. Je nach Breite der Matte 1 können die Seitenkanten des Naturfasergeflechtes aneinander stoßen oder -wie Fig. 2 zeigt mit einer Abdeckung 4 verbunden werden. Die Abdeckung 4 besteht ebenfalls aus Naturfasern. Die Matte 1 wird dann durch Steppnähte 11 verfestigt. Die Matte 1 wird in Breiten von von 20 bis 100 cm hergestellt. Ihre Dicke beträgt ca 2 bis 10 cm.

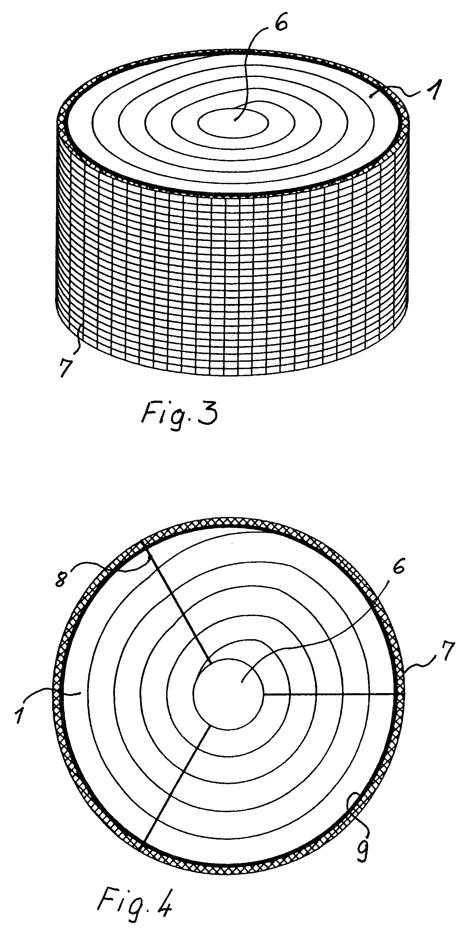

Die Matten werden maschinell vorgefertigt, und zwar in rel. langen Bahnen.Zur Gefäßfertigung werden sie dann in vorgegebenen Längen geschnitten. Da an der Schneidstelle kein Substrat austreten darf, werden bei der Fertigung die Schnittstellen verstärkt, indem Naturfasern als Zwischenlagen 3 in die Matte eingelegt werden. Der Schnitt geht daher mitten durch die Zwischenlage 3 hindurch. Die so vorgefertigte Matte 1 wird nun gemäß Fig. 3 und 4 zu einem Pflanzgefäß geformt. Hierzu wird die Matte 1 schneckenförmig aufgerollt und dann mit einem Netz 7 umgeben. Dieses Netz 7 kann aus Naturfaser oder im Bedarfsfall aus Metall bestehen. Das Netz 7 wird mittels Halterungen 8 zur Schneckenmitte hin gespannt. Diese Halterungen 8 können beliebige Fäden oder Drähte sein. Ein aus Pflanzenfaser hergestelltes Netz 7 kann auf die fertige Matte 1 aufgeklebt werden. Dieses wird bei kleineren Gefäßen von Vorteil sein. Es bietet sich auch eine Aufbringung des Netzes 7 bei der Herstellung der Naturfaserbahn 2 an. Hier kann das Netz 7 bereits vor der Herstellung der Matte 1 an den Enden der Naturfaserbahn 2 aufgesteppt werden, die dann den äusseren Abschluß der zur Schnecke aufgerollten Matte 1 bildet.

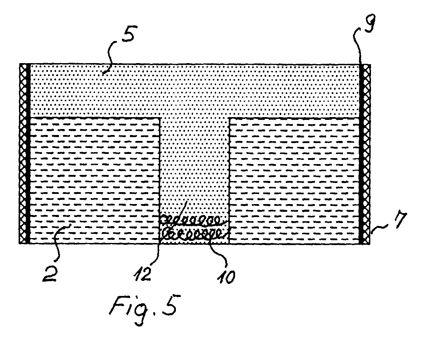

Der Verwendungszweck des Gefäßes bestimmt den Aufbau. Wird das Pflanzgefäß beispielsweise für Blumen benutzt, so empfiehlt es sich das Netz 7 breiter zu machen als die Schnecke. Damit entsteht ein überstehender Rand gemäß Fig. 5. Dieser überstehende Rand gestattet, oberhalb der Schnecke ebenfalls ein Substrat 5 aufzubringen und hier die Samen bereits einzulegen.

Wird eine größere Bewässerung der Pflanzen gewünscht, kann zwischen der aufgewickelten schneckenförmigen Matte 1 und dem Netz 7 noch eine wasserdichte Folie 9 eingebracht werden.
Ein so gebildetes Pflanzgefäß gestattet auch das Einbringen von größeren Pflanzen, die einen Wurzelballen haben, wie Bäume oder Sträucher. Um diese sicher in das Pflanzgefäß einzubringen, wird die Matte 1 um einen Kern 6 gewickelt. Dieser Kern 6 kann ein Papprohr sein, das nach dem Wickelvorgang wieder entfernt wird. Damit entsteht in der Mitte der schneckenförmigen Matte 1 ein Hohlraum 12 (s. Fig. 5). Dieser Hohlraum 12 dient zur Aufnahme der Wurzelballen. Zweckmäßig wird dieser Hohlraum 12 nach unten hin verschlossen, und zwar durch einen Pfropfen 10, der aus Naturfaser besteht. Als Naturfaser hat sich Kokos besonders durch seine lange Verrottungszeit von ca. 5 bis 6 Jahren bewährt. Somit wird die Kokosfaser für das gesamte Pflanzgefäß bevorzugt.

Die Matten in ihren abgestuften Bahnbreiten lassen die Herstellung von allen Gefäßgrößen von ca. 20 cm bis zu 1 m zu. Die fertigen Pflanzgefäße können auch in andere Formen wie oval usw. gedrückt werden. Große Pflanzgefäße von 1 m und 1 m Höhe verlangen einen guten Halt. Hier empfiehlt sich , aussen um das Gefäß herum eine Umgürtelung in Form von zwei oder mehreren Ringen aus festem Material, z.B. Eisenringen, oder gepflochtenen Faserbändern zu legen, die dann mit einem zweiten Netz umgeben werden können. Die Pflanztöpfe lassen sich auch im Freien als Blumenkübel aufstellen, wobei farbige Netze für ein gutes Aussehen sorgen.

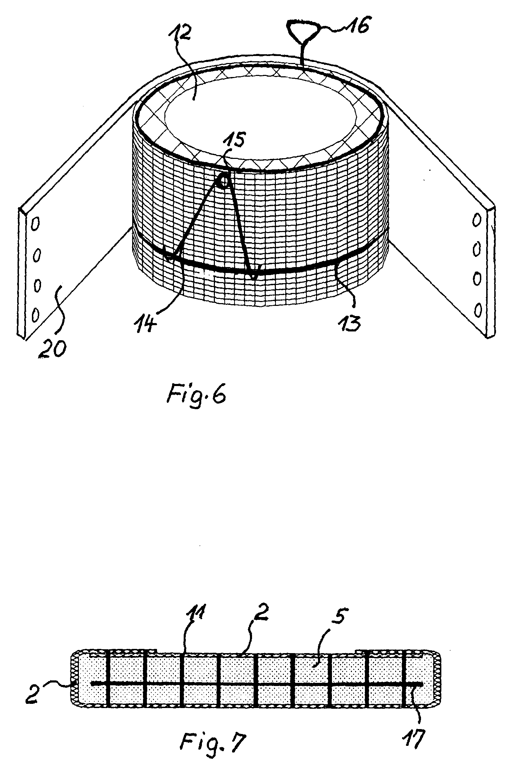

Das Pflanzgefäß ist in sich stabil und damit gut für den Transport geeignet. In einzelnen Fällen wird es jedoch erforderlich sein das Pflanzgefäß mit Traggriffen zu bestücken, um so ein Umsetzen des Gefäßes , insbesondere in Baumschulen, zu erleichtern. So kann gem. Fig. 6 ein Band 13 , z. B. in Form eines Stahldrahtes, um das Gefäß gelegt werden, das mit zwei Bügeln 14 versehen ist, die in ihrem oberen Teil eine Schlaufe 15 bilden. In diese Schlaufe 15 lassen sich beliebige Traggriffe 16 einhängen und nach dem Transport wieder leicht entfernen. Die Schlaufen 15 der Bügel dürfen die Oberkante des Gefäßes nicht überragen, damit sie unsichtbar bleiben.

Nach der Erfindung ist bei großen Pflanzgefäßen eine Verstärkung der Wandung vorgesehen, und zwar in Form eines Netzes 7 ,das aus Naturfasern oder Metall besteht. Die Praxis hat gezeigt, daß sich als Netz ein Drahtgeflecht, z. B. ein Maschendraht, anbietet. Dieses Drahtgeflecht besteht aus einem Draht hoher Festigkeit und aus einem verottbaren Material, so daß sicher gestellt ist, daß der Draht sich ebenfalls auflöst, wenn das Pflanzgefäß verrottet.

Dieses Drahtgeflecht kann als Netz 7 außen um das Gefäß gelegt werden - wie Fig. 3 zeigt - oder es kann in die letze äußere Windung der Matte eingebettet sein. Die Matte 1 wird dementsprechend gleich mit dem Drahtgeflecht 17 belegt, wie Fig. 7 zeigt. Somit besteht die Matte 1 aus einem Naturfasergeflecht 2, vorzugsweise Kokos, welches in Bahnen vorgegebener Breiten vorgefertigt ist. Diese Naturfaserbahnen werden in Längen geschnitten, die der jeweiligen Größe des Pflanzgefäßes angepaßt sind. Auf diese Naturfaserbahn wird das Drahtgeflecht 17 aufgelegt, wobei die Breite des Drahtgeflechtes kleiner als die Bahnbreite der Matte ist. Über das Drahtgeflecht 17 wird das Substrat 5 auf die Naturfaserbahn geschichtet, und eine zweite Naturfaserbahn, ebenfalls geringerer Breite, aufgelegt. Die Matte wird nunmehr durch Umschlagen der Seiten der unteren Naturfaserbahn - zur Bahnmitte hin - geformt und anschließend versteppt. Aus der so gebildeten Matte wird ein Pflanzgefäß durch aufwickeln über einem Kern hergestellt.

Je nach Verwendungszweck wird das Drahtgeflecht 17 über die gesamte Bahnlänge oder nur über einen Teil der Bahnlänge gelegt. In vielen Fällen genügt es, wenn nur die letzte äußere Windung des Pflanzgefäßes durch das Drahtgeflecht verstärkt ist. In diesem Fall wird das Drahtgeflecht 17 in seinen Abmessungen dem sich ergebenden Durchmesser der Gefäßes angepaßt, so daß es sich im gewickelten Zustand mit seinen Enden gerade überlappt.

Bisher wurde davon ausgegangen, daß das Drahtgeflecht 17 schmaler als die Bahnbreite ist, um Verletzungen bei der Handhabe des Gefäßes zu vermeiden. Die Tragfähigkeit des Gefäßes kann jedoch erhöht werden wenn das Drahtgeflecht 17 an einer seiner Längskanten rechtwinklig umgebogen ist und diese umgebogene Kante unter dem schneckenförmig aufgerollten Pflanzgefäß zu liegen kommt. Hierbei wird es erforderlich sein die umgebogene Kante mit Einschnitten oder Einschlagfalten zu versehen. Dieses gekanntete Drahtgeflecht wird bei den schlauchförmigen Matten gem. Fig. 7 als zusätzliches außen auf liegendes Drahtgitter an.

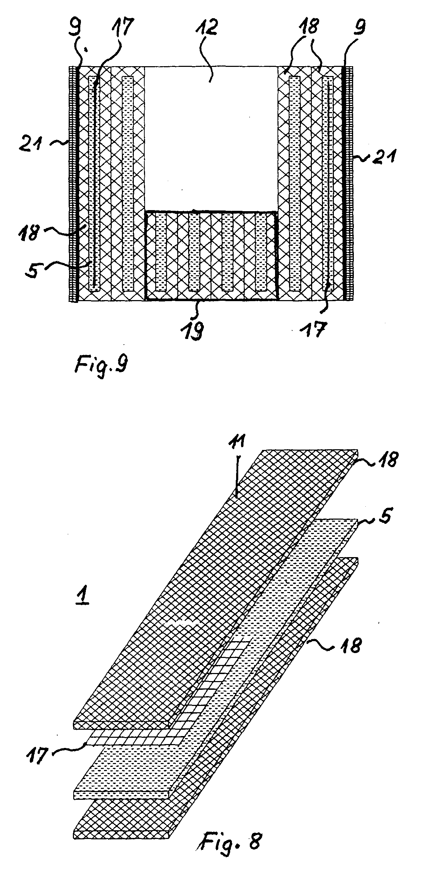

Die aus Bahnen vorgefertigte Matte 1 gem. Fig. 7 hat einen schlauchförmigen Aufbau, der durch das Umschlagen der Bahnseiten entsteht. Diese Schlauchform ist nur eine der Möglichkeiten. Es hat sich gezeigt, daß auch bei übereinander liegenden Einzelbahnen nach dem Versteppen kein Substrat austritt. Der Aufbau einer solchen Matte ist in Fig. 8 gezeigt.

Die schichtweise aufgebaute Matte 1 besteht aus einer unteren Naturfaserbahn 18. Auf diese Naturfaserbahn 18 wird das Substrat 5 aufgebracht und das Drahtgeflecht 17 in entsprechender Länge aufgelegt. Nunmehr wird eine zweite Naturfaserbahn 18 darüber gelegt und das Ganze mittels Steppnähte 11 miteinander versteppt. Bei einer solchen Ausführung erübrigen sich die Zwischenlagen 3. Das Drahtgeflecht kann auch hier mit einer umgebogenen Kante versehen sein, die dann an einer Seite der Bahn zum Anliegen kommt.

Das Pflanzgefäß besteht aus einer Anzahl von Windungen, die sich aus dem schneckenförmigen Aufrollen ergeben. Die Anzahl der Windungen kann den in das Gefäß einzubringenden Pflanzen angepaßt werden. Ebenso läßt sich durch die Größe des Wickelkerns der innere Hohlraum 12 des Gefäßes bestimmen. Für die Festigkeit eines Pflanzgefäßes mit eingebettetem Drahtgeflecht reichen in der Regel zwei Windungen aus. So entsteht ein großer Hohlraum 12 im Innern des Gefäßes. Um diesen Hohlraum 12 nach unten abzuschließen wird in den unteren Bereich des Hohlraumes 12 ein gewickelter Pfropfen 19 eingebracht, der aus Naturfasern, vorzugsweise Kokos, besteht und ebenfalls aus Naturfaserbahnen entsprechender Breiten gewickelt ist. Es empfiehlt sich diesen mit einem Substrat zu belegen, oder das Substrat gleich in die Wickelbahn einzubringen. Dieser Pfropfen 19 ist so eingepreßt, daß er nicht herausfallen kann. Zusätzlich können aber noch weitere bekannte Befestigungsmöglichkeiten vorgesehen werden. Der Pfropfen kann auch aus anderen pflanzenverträgliche Stoffen hergellt werden.

Die äußere Gestalt des Pflanzgefäßes kann dadurch verbessert werden, daß um das Gefäß eine Manschette 20 gelegt wird. Diese Manschette 20 ist vorzugsweise aus Naturfasern hergestellt, wobei sich feinfädrige Fasern besonders anbieten. Die Manschette kann farbig sein. Die Manschette 20 ist an ihren zusammen stoßenden Kanten mit einem Verschluß bekannter Art versehen. Als Verschluß bieten sich Verschnürungen oder Klettverbindungen oder Verklebungen besonders an.

Das Pflanzgefäß ist durch die verwendeten Naturfasern, insbesondere Kokos, feuchtigkeitsfest und auch gegen Sonneneinwirkung sicher. Die eingesetzten Pflanzen unterliegen damit nicht den bei Kunststoffkübeln üblichen Temperaturschwankungen. Durch eine Tränkung mit Spezialmitteln kann dieser Zustand noch verstärkt werden.

Das Pflanzgefäß gibt durch die Dichtigkeit seines Naturfasergeflechts nur relativ wenig Feuchtigkeit nach außen ab. Diese Feuchtigkeitsabgabe kann dadurch geregelt werden, daß außen um das Pflanzgefäß herum eine Wasser undurchlässige Folie 9 gelegt wird. Als Folie 9 bietet sich eine Bio Folie an, die ebenfalls verottet, so daß die Folie zusammen mit dem Pflanzgefäß abbaut. Die Bio Folie 9 wird auf die äußere Naturfaserbahn geklebt oder geschweißt. Um die Folie herum wird dann noch eine dünnes Naturfasergwebe 21 gelegt, um das Aussehen zu verbessern und die Folie vor Beschädigung zu schützen. Ein solches Pflanzgefäß ist in seinem Aufbau in Fig. 9 im Schnitt gezeigt.

## Patentansprüche

1. Planzgefäß zur Aufnahme von Pflanzen aller Art, bestehend aus geformten Matten, die als Träger eines Substrates dienen und die zu einem Rundkörper gewickelt sind in dessen Mitte die Pflanze eingebracht ist, ***dadurch gekennzeichnet***, daß das Pflanzgefäß aus Matten (1 u. 18) geformt ist, die aus Naturfaserbahnen gebildet sind und die um einen Kern (6) so gewickelt sind, daß ein schneckenförmiges Gefäß mit innen liegendem Hohlraum entsteht.

2. Pflanzgefäß nach Anspruch 1, ***dadurch gekennzeichnet***, daß aus Naturfaserbahnen (2) eine schlauchförmige Matte (1) dadurch gebildet wird, daß die Naturfaserbahn über ihre Länge beidseitig nach innen umgeschlagen und mittels Steppnähte verbunden wird.

3. Pflanzgefäß nach Anspruch 1 u. 2, ***dadurch gekennzeichnet***, daß auf die Naturfaserbahn (2) ein Drahtgeflecht (17) aufgelegt ist, dessen Breite geringer als die Breite der Naturfaserbahn ist, und das die Naturfaserbahn (2) über dem Drahtgeflecht (17) zu einer schlauchförmigen Matte umgeschlagen wird.

4. Pflanzmatte nach Anspruch 1, ***dadurch gekennzeichnet***, daß die um einen Kern wickelbare Matte (1) aus einzelnen Lagen übereinander angeordneter Bahnen gebildet ist, deren untere Lage eine Naturfaserbahn (18) ist, auf die als zweite Lage ein Substrat (5) aufgebracht ist, daß über dem Substrat als dritte Lage ein Drahtgeflecht (17) aufgelegt ist, daß als abschließende Lage eine Naturfaserbahn (18) aufliegt und daß alle Lagen durch Steppnähte (11) miteinander versteppt sind.

5. Pflanzmatte nach Anspruch 4, ***dadurch gekennzeichnet***, daß das Drahtgeflecht (17) über eine seiner Längskanten im rechten Winkel umgebogen ist und beim Wickeln der Bahn mit seiner abgewinkelten Längskante unter dieser zu liegen kommt.

6. Pflanzgefäß nach Anspruch 3;4 und 5, ***dadurch gekennzeichnet***, daß das Drahtgeflecht (17) in seiner Länge so begrenzt ist, daß es nur in der äußeren Wickelbahn des Gefäßes wirksam ist.

7. Pflanzgefäß nach Anspruch 1 und 4, ***dadurch gekennzeichnet***, daß außen um die aufgewickelte Matte eine wasserdichte Bio Folie (9) aufgebracht ist und daß um die Bio Folie herum eine dünnes Naturfasergewebe (21) gelegt ist.

8. Pflanzgefäß nach Anspruch 1 bis 7, ***dadurch gekennzeichnet***, daß um das Gefäß ein Band (13) gelegt ist, das Träger eines zum oberen Gefäßrand geführten Drahtbügels (14) ist und daß der Drahtbügel (14) im oberen Umlauf eine Schlaufe (15) bildet, in die ein Tragegriff (16) einhängbar ist.

9. Pflanzgefäß nach Anspruch 1 bis 8, dadurch gekennzeichnet, daß um das fertige Gefäß eine Manschette (20) gelegt ist.
